(19) Europäisches Patentamt
European Patent Office
Office européen des brevets

(11) **EP 4 471 672 A1**

(12) **EUROPEAN PATENT APPLICATION**

(43) Date of publication:
**04.12.2024 Bulletin 2024/49**

(21) Application number: **23176078.6**

(22) Date of filing: **30.05.2023**

(51) International Patent Classification (IPC):
***G06N 7/01*** *(2023.01)*

(52) Cooperative Patent Classification (CPC):
**G06N 7/01; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Yang, Yinchong
85579 Neubiberg (DE)**
• **Otte, Clemens
81739 München (DE)**

(74) Representative: **Siemens Patent Attorneys
Postfach 22 16 34
80506 München (DE)**

(54) **AUTOMATICALLY QUANTIFYING THE ROBUSTNESS OF A CLASSIFICATION MODEL APPLIED IN AN INDUSTRY ENVIRONMENT**

(57)     Assistance apparatus and computer-implemented method for automatically quantifying the robustness of predictions of a classification model (f) against perturbations of its input data (x) measured in an industrial environment (11), comprising:
- obtaining (S1) the classification model (f) and at least one perturbation function (g) out of a number of perturbation functions characterizing perturbations occurring to input data (x) measured in an industrial environment (11),

- applying (S2) the at least one perturbation function to the input data of the classification model,
- determining (S3) a minimal degree of the perturbation ($\varepsilon$min) of the input data (x) that changes at least one of the predictions of the classification model (f) by performing a black-box optimization; and
- outputting (S4) the minimal perturbation ($\varepsilon$min) of the input data (x) corresponding to the at least one perturbation function (g).

FIG 2

## Description

The present invention relates to a computer-implemented method and an assistance apparatus to certify or quantify the robust-ness of a model against perturbations or variations of its input data measured in an industrial environment.

The invention is mostly described with respect to models that involve artificial intelligence (AI) methods applied for a classification task, but the principles of the invention have a broader scope and apply equally well to generic computer vision models such as regression task and object detection task.

AI solutions are nowadays used in relation to a large variety of industrial applications. One of the most relevant uses of artificial intelligence in the industrial environment is for classification tasks, like pattern recognition in timelines of sensor data or in image data. Those classification models are used for anomaly detection of a device or a machine, or for quality monitoring of a product manufactured in a production process. Classification models are used to identify pattern in image data, e.g., predicting the presence of an object for an autonomously driving vehicles or identifying an object in a manufacturing shop floor with autonomously moving robots. However, it is known that AI models, while they can be more sensitive to subtle patterns than humans, they can also lack robust-ness under perturbations, sometimes even with disturbances that cannot be perceived by the human eye.

While there are continuous improvements to make these models more robust with respect to perturbations of the input data, one needs a reliable way to quantify or certify the robust-ness of a model. One line of methods to quantify the robust-ness of a model is based on gradient-based adversaries. In an industrial context, AI models are typically deployed on end devices or compiled with specific technical configurations, which makes naive gradient-based attack unlikely. The more relevant type of perturbation for industrial classification models is believed to be natural perturbations, for instance, some (seemingly) random noises on the data, a shift in the coordinates, a change in the value precision caused by natural phenomena like blurring, noisy or geometric transformation of the data due to moving sensors measuring the data, weather conditions, etc. Input data of the classification model may even be perturbed by a mix of different types of natural perturbations.

These perturbations are most of the time not differentiable, making it challenging to perform formal or close to formal verifications in terms of the robustness. The next challenge with natural perturbation is about finding a non-trivial certificate, i.e., the upper-bound of the perturbation degree under which the model is pseudo-guaranteed to be robust. In some approaches the determined upper-bound level depends on the choice of a very first interval of perturbation degrees and may flutter a higher value robustness than realistic.

This kind of behaviour in the predictions of AI models becomes a severe issue for high-risk industrial use cases of AI, where the model performance is often required and expected to be stable.

Therefore, it is the object of the present application to provide a method and a assistance apparatus which automatically provides a robustness quantification applying realistic and reliable certification criteria for industry-grade or security-grade AI models.

This object is solved by the features of the independent claims. The dependent claims contain further developments of the invention.

A first aspect concerns a computer-implemented method for automatically quantifying a robustness of predictions of a classification model (f) against perturbations of its input data measured in an industrial environment, comprising the steps:

- obtaining the classification model and at least one perturbation function of a number of perturbation functions characterizing perturbations occurring to input data measured in an industrial environment,
- applying the at least one perturbation function to the input data of the model,
- determining a minimal degree of the perturbation of at least one data sample of the input data that changes the predicted class of the model by performing a black-box optimization; and
- outputting the minimal perturbation of the input data corresponding to the at least one perturbation function.

Determining the minimal degree of the perturbation of the input data that changes the predicted class of the model provides a more accurate quantification of the robustness of the model than determining as a more commonly used approach to determine a maximum of perturbation that does not change the prediction of the model. The black box optimization does require starting value and a feasible range. However, it does not require access to the model parameters, meaning that it can perform such certification on any model, even non-parametric ones, and any perturbations, even non-differentiable ones. It provides reliably the minimal degree of perturbation even at lower perturbation outside such a starting value or interval. Black-box optimization is an optimization algorithm for global optimization of black-box functions, i.e., functions that does not assume any functional form.

In a further embodiment the black-box optimization is performed by one of a Bayesian optimization algorithm, a Homology Global Optimization, preferably a Simplicial Homology Global Optimization, an optimization applying a black-box optimization library, or a simulated annealing optimization.

The Bayesian optimization algorithm is a Gaussian Process model and performs well for an optimization problem of variables being in the form of a scalar, such as the perturbation degrees. Simplicial Homology Global Optimization is an algorithm that can perform global optimization with constraints. Simulated annealing can identify global optima but does not include constraint. One possibility is to embed the constraint as penalization term into the optimization objective, such that not satisfying the constraint would result in extremely large objective. In the present case an optimization formulation comprises a minimizing constraint. Black-box Optimization applying a meta optimization library was so far not applied to optimization with constraints but provides a very flexible approach by evaluating the optimization problem and selecting an optimization algorithm, or which combination of algorithms, which works best for the given problem.

In a further embodiment the at least one perturbation function provides a natural perturbation characterizing perturbations of input data, especially,

> for image data: geometric perturbations, pixel perturbations, special effect perturbations,
> for time series data: temporal perturbations, special perturbations,
> for tabular data: discrete sampling,
> for generic data: Gaussian noise, uniform noise, missingness.

This has the advantage that the robustness of the model is estimated with natural perturbations, i.e., with perturbations that are likely to be found when applying the model to input data as measured in a real industrial environment. In comparison with conventional gradient-based adversary estimators, which are rather formal and by construction provide a conservative estimate, the present invention provides a realistic (and thus more useful) estimate.

In a further embodiment at least one perturbation function represents a complex perturbation of several different perturbation functions applied simultaneously to the input data.

In a further embodiment the at least one perturbation function comprises an ensemble of multiple perturbations performed in sequence to the input data.

This enables the quantification of the robustness of the classification model when the input data is perturbed in an unknown way, which is a realistic scenario in industrial environments especially when the model is applied to a new unknown industrial environment, e.g., a new machine, new configuration of the machine to be monitored.

In a further embodiment the method comprises the step of selecting one of various different types of distance measures applied on the perturbation degree parameter to determine the minimal perturbation of the input data.

The perturbation is a function parameterized by the degree. For instance, "adding" is a dummy-perturbation but "how much is being added" is then the degree. The selection of the applied distance measure provides flexibility with respect to the relevance of each perturbation degree parameter of the different perturbation functions contributing to output minimal perturbation. This allows an adaptation of the robustness quantification to different application scenarios of the classification model.

In a further embodiment training data are generated depending on the determined minimal degree of perturbation, wherein an updated classification model is created by training the classification model with the generated training data. The minimal degree perturbation of the updated classification model is- determined and the updated classification model is output if the determined minimal degree of perturbation is higher than a predefined threshold.

This enables the generation of training data depending on the contribution of the different perturbation functions to the minimal perturbation and efficiently optimizing the classification model by re-training it with the generated training data.

A second aspect concerns an assistance apparatus for automatically quantifying a robustness of predictions of a classification model against perturbations of its input data measured in an industrial environment, comprising:

- an input module, configured to obtain the classification model and at least one perturbation function of a number of perturbation functions characterizing perturbations occurring to input data measured in an industrial environment,
- a perturbation module, configured to apply the at least one perturbation function to the input data of the model, and to determine a minimal degree of the perturbation of the input data that changes at least one of the predictions of the model by performing a black-box optimization; and
- an output module, configured to output the minimal perturbation of the input data corresponding to the at least one perturbation function.

A third aspect concerns to a computer program product directly loadable into the internal memory of a digital computer, comprising software code portions for performing the steps as described before, when said product is run on said digital computer.

The computer program product can be stored on a computer-readable storage medium comprising instructions which, when executed by a computer, cause the computer to carry out the steps as described before.

The invention will be explained in more detail by reference to accompanying figures. Similar objects will be marked by the same reference signs.

Figure 1    shows an embodiment of the inventive method illustrated by a flow diagram.

Figure 2    schematically illustrates an embodiment of the inventive assistance apparatus.

Figure 3    schematically illustrates minimal perturbations for gradient adversarial perturbations determined using maximizing and minimizing constraint optimization problem for gradient based adversarial perturbations.

Figure 4    schematically illustrates minimal perturbation for natural perturbations using maximizing vs. minimizing constraint optimization problem for gradient based adversarial perturbations; and

Figure 5    illustrates an embodiment of the determination of the minimal degree of perturbation by black-box optimization strategy compared to a grid search.

It is noted that in the following detailed description of embodiments, the accompanying drawings are only schematic, and the illustrated elements are not necessarily shown to scale. Rather, the drawings are intended to illustrate functions and the co-operation of functions or components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method and vice versa.

The numeration of the steps in the methods are meant to ease their description. They do not necessarily imply a certain ordering of the steps. In particular, several steps may be performed concurrently.

The proposed method derives non-trivial robustness certification for artificial intelligence, shortly AI, models that perform a classification task applied in an industrial environment requiring reliable predictions for input data measured at an industrial device. Examples of such tasks include but are not limited to image classification, credibility classification and clinical therapeutic decision support. Typical classification tasks in the industrial environment are pattern recognition in timelines of sensor data or in image data. Those classification models are used for anomaly detection, e.g., with respect to an operation mode of a device or a machine, or for quality monitoring of a product manufactured in a production process or for controlling robot movements working in a manufacturing plant.

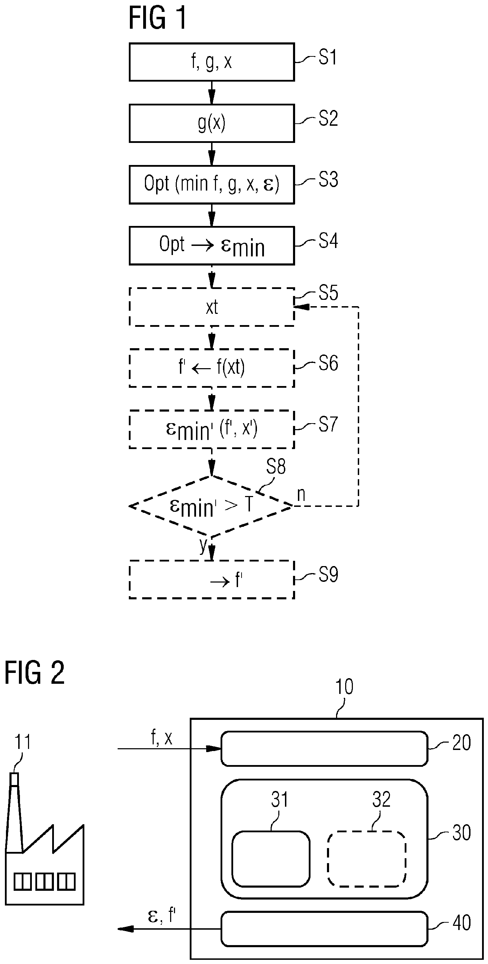

Fig. 1 shows an embodiment of the method in more detail. In a first step S1, the classification model f and at least one perturbation function g is obtained out of a number of perturbation functions characterizing perturbations occurring to input data x measured in an industrial environment. The at least one perturbation function g is applied to the input data x of the model, see step S2.

Types of perturbations relevant for industrial AI are so called "natural perturbations", such as blurring, noisy, geometric transformation of the data. These perturbations are likely to occur in the industrial context due to, e.g., data quality, missing measurements, change of environment, and the like.

The challenge with natural perturbation is about finding a non-trivial certificate, i.e., the upper-bound of the perturbation degree under which the model is pseudo-guaranteed to be robust. For instance, it is trivial to find a very large degree, such as masking 90% of the input image so that the classification model outputs a false prediction and claim that any proportion larger than or equal to 90% may falsify the model. But this information is not very useful because the stronger the perturbation, the less relevant it is for detecting non-trivial model failures. Instead, it is much more informative to derive a non-trivial upper-bound that is as close to "0 perturbation" as possible. In some approaches, e.g., interval- or grid-based approaches the determined perturbation value depends on the value of the first grid.

Therefore, in the present method a minimal degree of the perturbation $\varepsilon_{min}$ of the input data is determined that changes at least one of the predictions of the model by performing a black-box optimization, see S3. The minimal degree of perturbation $\varepsilon_{min}$ is determined by performing a black-box optimization to minimize a perturbation degree with the constraint that the classification model is not robust. The determined minimal degree of perturbation $\varepsilon_{min}$ of the input data corresponding to the at least one perturbation function is output, see S4. This means, outputting the minimal perturbation $\varepsilon$ that satisfies the optimum of an optimization formulation $\min \|\varepsilon - \varepsilon_0\|_p$. Throughout this description the expression "perturbation degree" is synonymously used to the expression "perturbation" and marked by the reference sign "$\varepsilon$".

Based on the determined and output minimal perturbation $\varepsilon$ which is a quantification of the robustness of the considered classification model, classification models of different architectures, each solving the same task can be evaluated. The quantified robustness can serve as an additional criterion for model selection. E.g., selecting of classification models used for autonomously driving applications, which operate best in special whether conditions like fog, snow, or when objects are in motion.

According to some embodiments, refinements, or variants of embodiments, following perturbation functions are applied to characterize natural perturbations:

(a) for image data:

- geometric perturbations (e.g., rotations, shifts, shears, grid distortion, zooming or cropping);
- pixel perturbations (e.g., changes in brightness, contrast, saturation or hue);
- special effect perturbations (e.g., blurring, JPEG compression or downscaling);

(b) for time series data:

- temporal perturbations (e.g., rotations, shifts or Brownian noise);
- special perturbations (e.g., random sampling or weighted probabilistic sampling);

(c) for tabular data:

- discrete (categorical) sampling;

(d) for generic data:

- Gaussian noise;
- uniform noise;
- missingness.

The previous list of natural perturbations is not exhaustive but gives an idea of how they can be ordered into categories, which can be stored in a library or database. This list of categories can, e.g., be shown in a user interface, from which a user can choose the perturbation function under which the model is to be tested.

In an embodiment the classification function f is optimized based on the minimal degree of perturbation $\varepsilon_{min}$ of the input data and especially with respect to the perturbation functions which result in a low minimal perturbation. In Fig.1 the steps of the optimization of the regression function are shown in dashed lines.

First, training data xt are generated depending on the determined minimal perturbation and more specifically depending on the corresponding perturbation function, see S5. Preferably, training data xt are generated showing perturbations according to the perturbation function for which the smallest minimal perturbation has been determined. Additionally, training data are generated showing the perturbation according to another single perturbation function determined in step S3. Alternatively or additionally, training data are generated comprising of a mixture of perturbation functions which have been determined in step S3.

An updated classification model f' is created by training the classification model f with the generated training data xt, see step S6. In an embodiment the generated training data xt are added to previously used training data. The training of the classification model f can be performed assuming that the output of the classification model is still correct, i.e., the prediction has not changed. The training results in an updated classification model f'. The minimal degree perturbation $\varepsilon_{min}'$ (f',x') is determined of the updated classification model f', see S7, wherein perturbed input data x' are applied which are created by applying the at least one perturbation function to the input data similar to step S2. The updated classification model f' is output, see S8, if the determined minimal perturbation $\varepsilon_{min}'$ is higher than a predefined threshold T, see S7. If the determined minimal degree of perturbation $\varepsilon_{min}'$ is smaller than a predefined threshold T in step S7, steps S5-S7 are iterated until the determined minimal perturbation is higher than threshold T or another termination criterium is reached.

Fig.2 shows an embodiment of an inventive assistance apparatus 10 for automatically quantifying a robustness of predictions of the classification model f against perturbations of its input data x measured in an industrial environment 11. The assistance apparatus 10 comprises an input module (20), configured to obtain the classification model and at least one perturbation function out of a number of perturbation functions characterizing perturbations occurring to input data x measured in an industrial environment 11.

The assistance apparatus further comprises an optimization module 30. The optimization module comprises a robustness unit 31 configured to apply the at least one perturbation function g to the input data x of the model f, and to determine a minimal degree of the perturbation $\varepsilon_{min}$ of the input data x that changes at least one of the predictions of the model f by performing a black-box optimization. The assistance apparatus 10 comprises an output module (40), configured to output the minimal perturbation $\varepsilon_{min}$ of the input data x corresponding to the at least one perturbation function g.

The assistance apparatus 10 comprises at least one processor and a memory, into which a computer program product is loadable, comprising software code portions for performing the steps S1-S4 and/or S1-S9 when said product is run on said assistance apparatus.

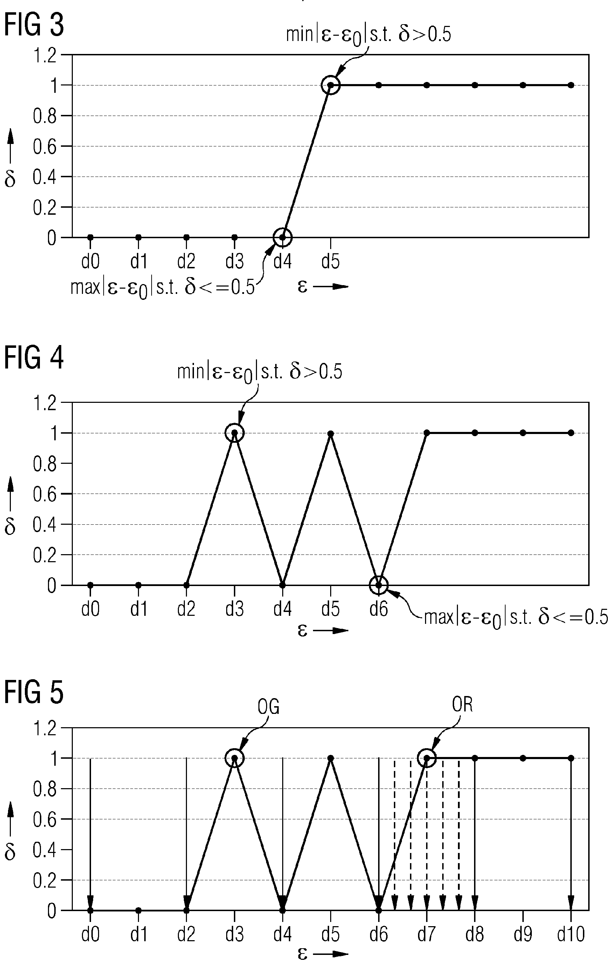

The problem to determine the minimal degree of perturbation in case of natural perturbations by formulation of an optimization problem for determining and quantifying the robustness of a classification problem is described in the following in more detail and illustrated in Fig. 3-5.

A constrained optimization problem is derived based on a certification or the AI robustness:

$$(1) \qquad \max |\varepsilon - \varepsilon_0| \ s.t. \delta\left(f(x), f\left(\pi(x; \varepsilon)\right)\right) \le \theta,$$

where

- $f$ denotes the classification model that can be any machine learning model or even expert system;
- $x$ denotes a single data point, typically from the validation set of input data;
- $\pi$ denotes the perturbation function parameterized by a perturbation degree parameter $\varepsilon$;
- $\varepsilon_0$ denotes the neutral degree of perturbation, i.e.,

$$f(x) = f\left(\pi(x; \varepsilon_0)\right);$$

- $\delta$ denotes the difference in the output space that has been caused by perturbation in the input space, and $\theta$ denotes the acceptance threshold.

By performing such maximization, it is an aim to find the largest degree of perturbation such that the classification model is still seen as robust. The criterion of robustness should be further specified with the function $\delta$ and threshold $\theta$. For a classification task, it is defined by

$$\delta(y, \hat{y}) = I(\arg\max y = \arg\max \hat{y})$$

with $\theta = 0.5$. The value of $\theta$ could be any fraction in (0, 1) since the indicator function $I$ only returns 0 or 1 as output. This formulation agrees with the formal certification objective in terms of an l2 norm and adversarial gradient perturbations.

In case of natural perturbations, however, following optimization formulation is proposed, which is more reliable:

$$(2) \qquad \min |\varepsilon - \varepsilon_0| \ s.t. \delta\left(f(x), f\left(\pi(x; \varepsilon)\right)\right) > \theta.$$

I.e., instead of maximizing the degree with the constraint that the model remains robust, it is proposed to minimize the degree with the constraint that the model is not robust. This is a more pessimistic but more reliable constraint. In case of applying Simulated Annealing for this constrained optimization, we propose the following formulation:

$$(2.1) \qquad \min |\varepsilon - \varepsilon_0| + \lambda \cdot I\left(\delta\left(f(x), f\left(\pi(x; \varepsilon)\right)\right) > \theta\right),$$

where $I$ denotes the indicator function and $\lambda$ a numerical constant that is large enough to overweigh the term $\min|\varepsilon - \varepsilon_0|$ that is supposed to be minimized.

For gradient adversarial perturbations, the two formulations will find two neighboring grid values. Maximizing the degree of perturbation such that the classification model is still seen as robust according to constrained optimization problem (1) results in minimal degree of perturbation d4. Minimizing the degree of perturbation such that changes the prediction of the classification model according to constrained optimization problem (2) results in minimal perturbation d5. These minimal perturbations d4 and d4 are neighboring grid values since the loss function is often expected to be monotonic in the perturbation degree, as illustrated in Fig. 3. In this case, finding one optimum is always equivalent to finding the other.

In practice, it is observed that it is not always the case for natural perturbations. In general, stronger degrees of natural perturbations should have a higher chance of falsifying the model. But one could often find such pairs of degrees that violate the monotony:

$$\varepsilon_k < \varepsilon_{k+1}: \delta\left(f(x), f\big(\pi(x; \varepsilon_k)\big)\right) > \delta\left(f(x), f\big(\pi(x; \varepsilon_{k+1})\big)\right).$$

In Fig. 4 is an illustration of two of such pairs of determined minimal degree and maximal degree of perturbations d3, d6. In such a situation, finding the minimal degree d5 is not equivalent to finding the maximal degree d6, or vice versa.

Since the constraint function $\delta(f(x), f(\pi(x; \varepsilon)))$ is not differentiable in $\varepsilon$, black-box optimization is performed to determine the minimal degree of the perturbation of the input data that changes at least one of the predictions of the model.

Black-box optimization refers to a problem setup in which an optimization algorithm is supposed to optimize, e.g., minimize, an objective function f through a so-called black-box interface: the optimization algorithm queries a value f(x) for a data point x, but it does not obtain gradient information, and in particular it cannot make any assumptions on the analytic form of the object function f, e.g., being linear or quadratic. Black-box optimization considers the design and analysis of algorithms for problems where the structure of the objective function and/or the constraints defining the set is unknown, unexploitable, or non-existent.

Simplicial Homology Global Optimization, known also under the abbreviation shgo is applied as a simple baseline of a black-box optimization. Simplicial Homology Global Optimization is an algorithm that can perform global optimization with constraints. Especially for the certification purpose, it is very important to perform a global search to avoid arriving at a local minimum, e.g., as shown in Fig. 4 the second peak from the left at d5 with the obviously false claim that any perturbation degree smaller than d5 would not falsify the model (degree 3 is the evidence thereof).

Alternatively, it is proposed to apply the Bayesian optimization algorithm for performing black-box optimization. The Bayesian optimization algorithm is preferably applied because the variable in our optimization problem, namely the degree of the perturbation, is a scalar. Such a situation excludes the usage of simplex-based methods such as Nelder-Mead. Instead, it is an ideal use case for a Gaussian Process model which is the foundation of Bayesian optimization and has the potential to identify global optimum, or at least local optimum in a much wider neighborhood.

Simulated annealing is a stochastic optimization algorithm inspired by the annealing process in metallurgy. It aims to find the global degree of a given function by simulating the gradual cooling of a material. It starts with an initial solution and iteratively explores the search space by accepting both better and worse solutions based on a probability distribution, gradually reducing the acceptance probability as the algorithm progresses, allowing it to escape local optima and converge to the global optimum. It can be tuned to deal with constraint with a penalization term as described in Equation 2.1.

As a further alternative, it is proposed performing the optimization with a black-box optimization library such as nevergrad by Facebook research. Nevergrad provides a two staged optimization for each problem. In the first stage, a so-called "optimization wizard" would estimate which optimization algorithm, or which combination of algorithms, may be the optimal choice for the given problem. Such estimate is based on the dimension of the budget, dimensionality, and the constraint. Then the selected algorithm or algorithms will be executed in the second stage to perform the actual optimization. So far, nevergrad library is used for hyperparameter search but not for optimizing constraint optimization problems.

Further, recursive grid search algorithm and/or a recursive binary search algorithm is known for the determination of the minimal perturbation of the input data. Binary and grid search algorithms are two ways of implementing derivative-free optimizers, i.e., optimizers which are not gradient-based and can be applied most advantageously to artificial intelligence models where a gradient cannot be defined.

Grid search has the advantage that it is easy to implement and can benefit from parallel inference. Specifically, determining data perturbations along the grid as mini batches is very efficient with respect to its computation due to modern neural network libraries. Recursive grid search has the disadvantage that the choice of the very first grid is critical for the following steps. Once the algorithm has found two grid values such that

$$\varepsilon_k < \varepsilon_{k+1}: \delta\left(f(x), f\big(\pi(x; \varepsilon_k)\big)\right) < \delta\left(f(x), f\big(\pi(x; \varepsilon_{k+1})\big)\right),$$

it will only try fine-tuning the optimum value within $(\varepsilon_k, \varepsilon_{k+1})$, and ignore the possibility that there might be another smaller value smaller than $\varepsilon_k$. In other words, the recursive grid search also assumes the function $\delta$ to be monotonic in $\varepsilon$. In Fig. 5 such a situation is demonstrate on the same landscape as Fig. 4.

With an initial grid, see bold lines at perturbation degree d0, d2, d4, d6, d8, d10, the algorithm would allocate the minimal perturbation degree in the grid between d6 and d8. The recursive grid search algorithm can never find the global optimum OG at d3, since all the following grid search only operate within the range of d6, d8. Such the recursive grid search algorithm would find an optimum OR at perturbation degree d7.

The proposed Simplicial Homology Global Optimization, Bayesian optimization and Black-box optimization, all have the potential to perform global optimization given enough processing budget and can circumvent the drawback of recursive grid search. Black-box optimization algorithms can also deal with a moderate number of multiple degrees of perturbations efficiently, while the number of necessary grid points would increase exponentially in case of the grid search algorithm.

To cover natural perturbations a wider range perturbation functions are to be considered. Therefore, at least one perturbation function is applied to the input data of the classification which represents a complex perturbation of several different perturbation functions applied simultaneously to the input data. I.e., the perturbation function is so complex that it requires multiple degree parameters. An example is a "grid distortion" perturbation typically applied on image data. One perturbation parameter is required to control the size of the grid granularity, and another parameter to quantify the elasticity, i.e., the strength of the distortion.

Further on, the at least one perturbation function is structured as an ensemble of multiple perturbations performed in sequence to the input data, e.g., chaining multiple perturbation functions and identifying the smallest degree perturbations, which is now no more scalar value but a vector of minimum perturbations comprising an element for all considered multiple perturbations. Thus, the perturbation degree parameter $\varepsilon$ is a vector comprising a perturbation degree for the different perturbation functions and/or multiple perturbations performed in sequence respectively.

Therefore, a smaller lower bound is required for each respective perturbation in such an ensemble in comparison with a lower bound found for single perturbation function. In other words, if a minimization step would be performed on each of the individual perturbations, the lower bound is overestimating and has no more guarantee that the chained perturbation can indeed falsify the model prediction.

Further, the proposed approach is generalized by applying the l2 norm defined in a multi-dimensional space:

$$\min \|\varepsilon - \varepsilon_0\|_p \ s.t. \delta\Big(f(x), f\big(\pi(x;\varepsilon)\big)\Big) > \theta.$$

Note the difference that the degree parameter $\varepsilon$ and the neutral value $\varepsilon_0$ are both vectors. The function $\pi(x;\varepsilon)$ denotes either a perturbation function that requires multiple degrees or a chain of multiple perturbation functions, for instance,

$$\pi(x;\varepsilon) = \pi_K\big(\dots\big(\pi_3\big(\pi_2\big(\pi_1(x;\varepsilon_1);\varepsilon_2\big);\varepsilon_3\big)\dots;\varepsilon_K\big).$$

One of various different types of norms are selected to be applied on the perturbation degree ($\varepsilon$) to determine the minimal perturbation of the input data. A typical choice of the degree of the norm, denoted in p, includes 1, 2, and infinity. With p=2, the algorithm would typically tend to find a small degree value for each dimension of the perturbation or each perturbation in a chain. With p=1, the algorithm would tend to ignore certain perturbations that do not seem to have much impact on the classification model by keeping them to neutral and focus on the promising ones. With p being infinity, i.e., the norm returns the maximum value in the vector, the algorithm is only allowed to perturb one single dimension or one single function in the chain, which is equivalent to performing the single-dimensional optimization.

The described method can be extended to certify the robustness of other types of AI models, such as regression and object detection. However, designing the corresponding robustness function $\delta$ would require investigation into the modeling task, the AI model itself, as well as the real-world requirement.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for automatically quantifying the robustness of predictions of a classification model (f) against perturbations of its input data (x) measured in an industrial environment (11), comprising

    - obtaining (S1) the classification model (f) and at least one perturbation function (g) out of a number of perturbation functions characterizing perturbations occurring to input data (x) measured in an industrial environment (11),
    - applying (S2) the at least one perturbation function to the input data of the classification model,
    - determining (S3) a minimal degree of the perturbation ($\varepsilon$min) of the input data (x) that changes at least one of the predictions of the classification model (f) by performing a black-box optimization; and
    - outputting (S4) the minimal perturbation ($\varepsilon$min) of the input data (x) corresponding to the at least one perturbation function (g).

2. Computer-implemented method according to claim 1, wherein the black-box optimization is performed by one of a Bayesian optimization algorithm, a Homology Global Optimization, preferably a Simplicial Homology Global Optimization, a Penalized Simulated Annealing optimization, or a black-box optimization applying a black-box optimization library.

3. Computer-implemented method according to any of the preceding claims, wherein the at least one perturbation function (g) provides a natural perturbation characterizing perturbations of input data (x), especially,

   for image data: geometric perturbations, pixel perturbations, special effect perturbations,
   for time series data: temporal perturbations, special perturbations,
   for tabular data: discrete sampling,
   for generic data: Gaussian noise, uniform noise, missingness.

4. Computer-implemented method according to any of the preceding claims, wherein at least one perturbation function represents a complex perturbation of several different perturbation functions (g) applied simultaneously to the input data (x) .

5. Computer-implemented method according to any of the preceding claims, wherein the at least one perturbation function (g) comprises an ensemble of multiple perturbations performed in sequence to the input data (x).

6. Computer-implemented method according to any of the claims 4-5, wherein a perturbation degree ($\varepsilon$) is a vector comprising a perturbation degree for the different perturbation functions and/or multiple perturbations performed in sequence respectively.

7. Computer-implemented method according claim 6, wherein selecting one of several different types of norms applied on the perturbation degree ($\varepsilon$) to determine the minimal perturbation of the input data (x).

8. Computer-implemented method according to any of the claims, comprising further the steps

   - generating (S5) training data (xt) depending on the determined minimal degree of perturbation ($\varepsilon_{min}$),
   - creating (S6) an updated classification model (f') by training the classification model (f) with the generated training data (xt),
   - determining (S7) the minimal degree of perturbation ($\varepsilon_{min}$') of the updated classification model (f')
   - comparing the determined minimal degree of perturbation ($\varepsilon_{min}$') with a predefined (S8) threshold (T) and
   - outputting (S9) the updated classification model (f') if the determined minimal degree of perturbation ($\varepsilon_{min}$') is higher than a predefined threshold (T).

9. Assistance apparatus for automatically quantifying a robustness of predictions of a classification model (f) against perturbations of its input data (x) measured in an industrial environment (11), comprising

   - an input module (20), configured to obtain the classification model (f) and at least one perturbation function (g) out of a number of perturbation functions characterizing perturbations occurring to input data (x) measured in an industrial environment (11),
   - an optimization module (30), configured to apply the at least one perturbation function (g) to the input data (xt) of the model, and to determine a minimal degree of the perturbation ($\varepsilon$min) of the input data (x) that changes at least one of the predictions of the classification model (f) by performing a black-box optimization; and
   - an output module (30), configured to output the minimal perturbation ($\varepsilon$min) of the input data corresponding to the at least one perturbation function (g).

10. A computer program product directly loadable into the internal memory of a digital computer, comprising software code portions for performing the steps of claim 1-8 when said product is run on said digital computer.

## FIG 1

| | |
|---|---|
| f, g, x | S1 |
| g(x) | S2 |
| Opt (min f, g, x, $\epsilon$) | S3 |
| Opt $\rightarrow$ $\epsilon_{min}$ | S4 |
| xt | S5 |
| f' $\leftarrow$ f(xt) | S6 |
| $\epsilon_{min}$' (f', x') | S7 |

S8 $\epsilon_{min}$' > T

n

y

| | |
|---|---|
| $\rightarrow$ f' | S9 |

## FIG 2

10

f, x → 20

31        32
              30

$\epsilon$, f' ← 40

11

**FIG 3**

**FIG 4**

**FIG 5**

Europäisches
Patentamt

European
Patent Office

Office européen
des brevets

# EUROPEAN SEARCH REPORT

Application Number

EP 23 17 6078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/242250 A1 (CHEN PIN-YU [US] ET AL) 30 July 2020 (2020-07-30) <br> * paragraph [0026] – paragraph [0074] * <br> * figures 1, 2 * <br> ----- | 1-10 | INV. <br> G06N7/01 |

TECHNICAL FIELDS
SEARCHED      (IPC)

G06N

The present search report has been drawn up for all claims

| Place of search | Date of completion of the search | Examiner |
|---|---|---|
| The Hague | 20 November 2023 | Baldan, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 17 6078**

This annex lists the patent family members relating to the patent documents cited in  the above-mentioned European search report.
The members are as contained in the European Patent Office EDP file on
The European Patent Office is in no way liable for these particulars which are merely given for the purpose of information.

**20-11-2023**

| Patent document cited in search report | | Publication date | Patent family member(s) | | Publication date |
|---|---|---|---|---|---|
| US 2020242250 | A1 | 30-07-2020 | CN | 111476264 A | 31-07-2020 |
| | | | US | 2020242250 A1 | 30-07-2020 |

For more details about this annex : see Official Journal of the European Patent Office, No. 12/82